# EUROPÄISCHE PATENTSCHRIFT

(11) **EP 3 119 595 B1**
(45) Veröffentlichungstag und Bekanntmachung des Hinweises auf die Patenterteilung: **14.03.2018**
(21) Anmeldenummer: 15700392.2
(22) Anmeldetag: 16.01.2015
(51) Int. Cl.: B29C 73/16, F04B 49/16, F04B 35/06, B29L 30/00, F04B 35/04

(54) **VORRICHTUNG ZUM ABDICHTEN UND AUFPUMPEN AUFBLASBARER GEGENSTÄNDE**
DEVICE FOR SEALING AND INFLATING INFLATABLE ARTICLES
DISPOSITIF PERMETTANT D'ÉTANCHÉIFIER ET DE GONFLER DES GONFLABLES

(30) Priorität: 19.03.2014 DE 102014205067
(43) Veröffentlichungstag der Anmeldung: 25.01.2017
(73) Patentinhaber: Continental Reifen Deutschland GmbH, 30165 Hannover (DE)
(72) Erfinder: ZAUM, Christopher, 30926 Seelze (DE); DETERING, Rainer, 31535 Neustadt am Rdge (DE)
(74) Vertreter: Kilsch, Armin Ralph
(86) Internationale Anmeldenummer: PCT/EP2015/050724
(87) Internationale Veröffentlichungsnummer: WO 2015/139856

(56) Entgegenhaltungen:
- EP-A1- 2 058 112
- EP-A1- 2 396 165
- EP-A1- 2 497 628
- EP-A1- 2 657 007
- WO-A1-2015/010799
- US-A1- 2010 040 484

## Beschreibung

Die Erfindung betrifft eine Vorrichtung zum Abdichten und Aufpumpen aufblasbarer Gegenstände, insbesondere zum Abdichten und Aufpumpen von Kraftfahrzeugreifen, wobei die Vorrichtung als Druckgasquelle eine Kompressoreinheit aufweist, welche als über ein Schubkurbelgetriebe angetriebener Hubkolbenverdichter ausgebildet ist und einen in einem Zylinder oszillierend bewegten Kolben aufweist, wobei Kolben und Zylinder einen Kompressionsraum begrenzen und der Zylinder ausgangsseitig durch einen Zylinderkopf mit Auslassventil verschlossen ist, wobei die Vorrichtung weiterhin einen Behälter für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung aufweist, wobei die Ventil- und Verteilereinheit den Betrieb der Vorrichtung wahlweise in den beiden Betriebsarten "Aufpumpen" und "Dichtmittel fördern" erlaubt.

Solche Vorrichtungen zum Abdichten und Aufpumpen aufblasbarer Gegenstände werden insbesondere für so genannte Pannensets benötigt, die an Stelle eines Reservereifens im Kraftfahrzeug mitgeführt und angeordnet sind.

Bei solchen Pannensets zur temporären Reparatur von Reifenpannen, bei denen die Kompressoreinheiten, d.h. die Luftkompressoren zum Auffüllen eines beschädigten Reifens üblicherweise über eine Ventil- und Verteilereinheit für Dichtmittel und Druckgas mit dem zu reparierenden Reifen verbunden sind, weist die Ventil- und Verteilereinheit auch ein Anschlussstück zum Anschluss einer Dichtmittelflasche auf. Zur Abdichtung des beschädigten Reifens wird nun das Dichtmittel durch den Luftkompressor über die Ventil- und Verteilereinheit in den Reifen gefördert und danach der Reifen durch den Luftkompressor bis zu einem bestimmten Minimaldruck aufgepumpt.

Das eigentliche Abdichten des beschädigten Reifens erfolgt dann während der Weiterfahrt mit dem wieder befüllten Reifen. Durch den Überdruck im Reifen sowie die nach außen wirkenden Zentrifugalkräfte wird das Reifendichtmittel in die Beschädigung des Reifen (z.B. einen Stichkanal) gepresst. Durch die hier auftretenden hohen Scherkräfte und erhöhte Temperaturen wird ein chemischer Prozess im Reifendichtmittel in Gang gesetzt, der schließlich zu einer Verfestigung des Dichtmittels sowie einer temporären Abdichtung der Beschädigung führt.

Während des oben beschriebenen vorher durchgeführten Fördervorgangs des Dichtmittels in den Reifen wird das Reifendichtmittel durch das geöffnete Reifenventil gepresst. Der hier vorliegende Öffnungsquerschnitt entspricht in etwa dem Querschnitt einer typischen Reifenbeschädigung und es sind daher bestimmte Maßnahmen notwendig, um ein Verfestigen und Abdichten des Reifendichtmittels schon im Reifenventil zu verhindern. Neben einer chemischen Anpassung des Reifendichtmittels müssen zusätzlich besonders die physikalischen Randbedingungen während des Dichtmittelförderns so gewählt werden, dass eine Verfestigung des Reifendichtmittels im Reifenventil unterdrückt wird.

Ein hoher Volumenstrom bei der Förderung des Dichtmittels führt zu hohen Scherkräften im Reifenventil. Um ein dadurch bedingtes Verfestigen des Reifendichtmittels zu verhindern und also zu vermeiden, dass das Reifenventil während der Befüllung mit Dichtmittel verstopft, kann der Volumenstrom und somit die Leistungsfähigkeit des eingesetzten Luftkompressors begrenzt werden. Als Nebeneffekt wird hierdurch auch die Lufttemperatur am Kompressorausgang verringert. Die somit geringere Aufheizung des Reifendichtmittels verringert ebenfalls dessen Neigung zur Verfestigung. Diese Vorgehensweise hat jedoch den Nachteil, dass zum späteren Aufpumpen des Reifens gegen die vorhandene Leckage eine geringere Pumpleistung zur Verfügung steht und somit nur kleinere Beschädigungen des Reifens temporär abgedichtet werden können.

Eine Alternative zur beschriebenen Verringerung des Volumenstroms besteht z. B. im Ausbau des Reifenventils während der Befüllung mit Dichtmittel. Ein kompletter Ausbau des Reifenventils während des Dichtmittelpumpens verhindert sicher eine Blockade dieser Engstelle. Dies hat jedoch den Nachteil, dass der Abdichtvorgang als solcher deutlich komplizierter und für den Nutzer aufwendig wird.
Eine Lösung mehr allgemeiner Art zur Druckbegrenzung zeigt z.B. die DE 44 29 097 A1. Dort ist eine Kompressoreinheit bzw. einen Kolbenverdichter mit einem im Stand der Technik üblichen Auslassventil offenbart, welches gleichzeitig das einzige "Überdruckventil" für den Innenraum des Kompressors ist. Ein solches Auslassventil besteht aus einer federbelasteten Scheibe, welche eine Auslassbohrung des Verdichtungsraums im Zylinder abdeckt und bei entsprechendem Druck im Verdichtungsraum gegen die Feder abhebt. Die genannte Gefahr, dass das Reifenventil während der Befüllung mit Dichtmittel verstopft, ist hierdurch jedoch nicht angesprochen.

Die EP 2 058 112 A1 offenbart einen Reparatursatz für aufblasbare Artikel, gemäss dem Oberbegriff des Anspruchs 1, bei dem zwei Betriebsweisen schaltbar sind, nämlich eine Verbindung zwischen Kompressor und Dichtmittelbehälter und eine andere, bei der der Kompressor direkt mit dem aufblasbaren Artikel verbunden ist. Die dort vorgeschlagene Lösung besteht nun darin, dass die dazu erforderlichen Schaltmittel gleichzeitig den Kompressor elektrisch ein- und ausschalten. Für die Erfindung bestand daher die Aufgabe, eine Vorrichtung zum Abdichten und Aufpumpen aufblasbarer Gegenstände bereitzustellen, bei der während der Befüllung mit Dichtmittel ein unerwünschtes Verfestigen des Reifendichtmittels, beispielsweise in einem Ventil, in einem Reifenventil oder in Zuleitungen zum aufblasbaren Gegenstand verhindert wird.
Gelöst wird diese Aufgabe durch die Merkmale des Hauptanspruchs. Weitere vorteilhafte Ausbildungen sind in den Unteransprüchen offenbart.
Dabei ist der Hubkolbenverdichter mit einem variablen Totluftvolumen versehen, dessen Inhalt abhängig von der jeweiligen Betriebsart "Aufpumpen" und "Dichtmittel fördern" veränderbar und /oder zuschaltbar ist.

Die erfindungsgemäße Ausbildung ermöglicht eine Reduzierung von Volumenstrom und Lufttemperatur während der Förderung des Reifendichtmittels, ohne die Pumpleistung für das Befüllen des Reifens mit Luft zu reduzieren. Diese Regelungsaufgabe wird dazu durch eine einfache, mechanische Konstruktion gelöst und somit die Produktionskosten gegenüber typischen Luftkompressoren nur geringfügig erhöht. Mithilfe der vorliegenden Erfindung lässt sich die Leistungsfähigkeit von Dichtmittelkompressoren erhöhen ohne die Transportfähigkeit des geförderten Dichtmittels einzuschränken. Die Erhöhung der Stückkosten durch die notwendige Regelung ist im Vergleich zu einem typischen Dichtmittelkompressor sehr gering

Eine vorteilhafte Weiterbildung besteht darin, dass der Inhalt des Totluftvolumens abhängig von dem durch die beiden Betriebsarten erzeugten jeweils unterschiedlichen Druck im Kompressionsraum auch in der Auslassleitung des Kompressors veränderbar ist. Der Druck als Initialgröße ist deshalb geeignet, da in der Betriebsart "Dichtmittel fördern", d.h. also in dem Betriebszustand, in dem Dichtmittel gefördert wird, durch die hohe Viskosität des zu fördernden Dichtmittels der Druck im Kompressionsraum/ im Zylinderkopf gegenüber der Betriebsart "Aufpumpen" deutlich erhöht ist. Der Druck im Kompressionsraum bzw. im Luftauslass steigt also an.

Unter anderem kann die Steuerung des Totluftvolumens dann z. B. elektronisch erfolgen, etwa mit Hilfe eines Drucksensors, eines elektronischen Regelelements, oder auch durch einen elektromechanischen Aktuator erfolgen. Die Steuerung des Totluftvolumens kann auch durch eine zentrale Kontrolleinheit in Abhängigkeit des, durch die zentrale Kontrolleinheit bestimmten, momentanen Betriebszustands des Luftkompressors erfolgen.

Eine weitere vorteilhafte Ausbildung besteht darin, dass das Totluftvolumens durch einen mit dem Kompressionsraum verbundenen Druckraum bereitgestellt wird, dessen Inhalt von dem durch die beiden Betriebsarten erzeugten jeweils unterschiedlichen Druck im Kompressionsraum veränderbar ist. Damit lässt sich das Totluftvolumen unabbhängig von Form und Ausbildung des Kompressionsraums gestalten.

Eine weitere vorteilhafte Ausbildung besteht darin, dass der Inhalt des weiteren Druckraums gegen Federkraft veränderbar oder zuschaltbar ist, wobei die Federkraft vorzugsweise einstellbar ist. Damit mit ergibt sich eine konstruktiv sehr einfache Lösung. Gleiches gilt für eine weitere vorteilhafte Ausbildung, die darin besteht, dass der weitere Druckraum in Form eines zweiten Zylinder ausgebildet ist, in dem ein geführter verschiebbar beweglicher Kolbenschieber angeordnet ist, der von einer Feder beaufschlagt ist.

Eine weitere vorteilhafte Ausbildung besteht darin, dass der Inhalt des Totluftvolumens bzw. Druckraumes auf mindestens 5 % des Kompressionsraums bzw. Kompressionsvolumens vergrößert werden kann. Bei einem variablen Totluftvolumen von 10 % des Kompressionsvolumens kann der Volumenstrom um bis zu 40% und die Lufttemperatur um bis zu 70% reduziert werden, was natürlich auch zur oft gewünschten thermischen Entlastung des Zylinderkopfes beiträgt. Auch nimmt die elektrische Leistungsaufnahme des Kompressors bei aktivierten Totluftvolumen um bis zu 30% ab.

Eine weitere vorteilhafte Ausbildung besteht darin, dass das Druckgas gedämpft vom Kompressionsraum in den Druckraum, d.h. in das Totluftvolumen strömt, insbesondere durch eine pneumatische Drossel strömt. Damit können auch Druckspitzen aus dem den Kompressionsraum bildenden Zylinder abgedämpft werden.

Eine weitere vorteilhafte Ausbildung besteht darin, dass die Dämpfung dadurch erzeugt wird, dass der Kolbenschieber im zweiten Zylinder reibungsbehaftet verschoben wird, insbesondere dadurch, dass der Kolbenschieber mit zwischen Innenwand des zweiten Zylinder und Außenumfang des Kolbenschiebers angeordneten Dichtringen ausgebildet ist, die beim Verschieben eine Reibungsdämpfung erzeugen. Dadurch lässt es sich auf einfache Weise vermeiden, dass das Zuschalten des Totluftvolumens sich der Hubfrequenz des Kolbens nähert. Dies ist vorteilhaft, da die erwünschte Wirkung des "zugeschalteten" Totluftvolumens dann maximal ist, wenn dessen Inhalt während des gesamten Kolbenhubes annähernd konstant ist.

Eine weitere vorteilhafte Ausbildung besteht darin, dass die Dämpfung so erfolgt, dass die maximale Bewegungsfrequenz des Kolbenschiebers unter der Hubfrequenz des Kolbens liegt. Diese Auslegung verhindert ein unkontrolliertes Aufschwingen des Gesamt-Systems.

Anhand eines Ausführungsbeispiels soll die Erfindung näher erläutert werden. Es zeigen
- Fig. 1: eine erfindungsgemäße Vorrichtung zum Abdichten und Aufpumpen aufblasbarer Gegenstände in Ausschnitten,
- Fig. 2: einen Vergleich der Betriebsarten/Betriebszustände "Aufpumpen" und "Dichtmittel fördern" in Diagrammen

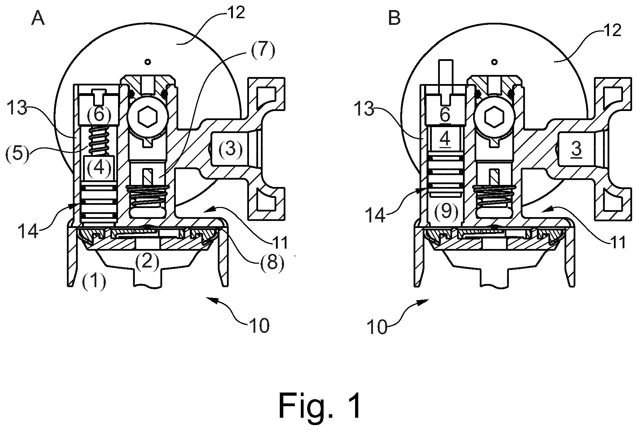

Fig. 1 zeigt in Ausschnitten eine Vorrichtung zum Abdichten und Aufpumpen aufblasbarer Gegenstände, insbesondere zum Abdichten und Aufpumpen von Kraftfahrzeugreifen. Die Vorrichtung ist in zwei Schaltzuständen A und B gezeigt, auf der linken Seite der Fig. 1 einmal mit nicht zugeschaltetem Totluftvolumen (A) und einmal mit zugeschaltetem Totluftvolumen (B) auf der rechten Seite der Fig. 1.

Die Vorrichtung weist als Druckgasquelle eine Kompressoreinheit auf, welche als über ein Schubkurbelgetriebe angetriebener Hubkolbenverdichter 10 ausgebildet ist und einen in einem Zylinder 1 oszillierend bewegten Kolben 2 auf, wobei Kolben 2 und Zylinder 1 einen Kompressionsraum begrenzen und der Zylinder 1 ausgangsseitig durch einen Zylinderkopf 11 mit Auslassventil 7 verschlossen ist.

Die Vorrichtung weist weiterhin ein Manometer 12 und einen hier nicht näher dargestellten Behälter für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung auf, wobei die Ventil- und Verteilereinheit den Betrieb der Vorrichtung wahlweise in den beiden Betriebsarten "Aufpumpen" und "Dichtmittel fördern" erlaubt. Die Ventil und Verteilereinheit ist üblicherweise an den Luftauslass 3 angeschlossen und in der Fig.1 ebenfalls nicht näher dargestellt

Der Hubkolbenverdichter 10 ist mit einem variablen Totluftvolumen versehen, dessen Inhalt abhängig von der jeweiligen Betriebsart veränderbar ist, nämlich abhängig von dem durch die beiden Betriebsarten "Aufpumpen" und "Dichtmittel fördern" erzeugten jeweils unterschiedlichen Druck im Kompressionsraum. Das variable Totluftvolumen wird in der gezeigten Ausführung durch eine zusätzliche Kammer, nämlich durch einen mit dem Kompressionsraum verbundenen Druckraum 9 bereitgestellt, dessen Inhalt von dem durch die beiden Betriebsarten erzeugten jeweils unterschiedlichen Druck im Kompressionsraum veränderbar bzw. zuschaltbar ist

Der Inhalt des Druckraums 9 ist gegen eine einstellbare Federkraft veränderbar, wobei der der Druckraum 9 in Form eines zweiten Zylinders 13 ausgebildet ist, in dem ein geführter verschiebbar beweglicher Kolbenschieber 4 angeordnet ist, der von der Feder 5 beaufschlagt ist. Die Einstellung bzw. Vorspannung der Feder 5 erfolgt mittels der Stelleinrichtung 6.

In der hier gezeigten Ausführung kann der Inhalt des Totluftvolumens bzw. Druckraumes 9 auf eine Größe/ein Volumen von mindestens 10% des Kompressionsraums bzw. Kompressionsvolumens vergrößert werden.

Die vorliegende Ausführung des Erfindungsgegenstandes steuert den Volumenstrom des Luftkompressors also durch ein variables, zuschaltbares Totluftvolumen.

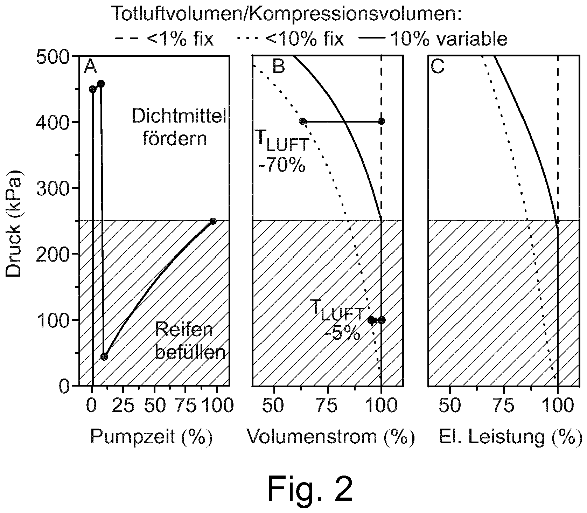

Fig. 2 zeigt einen Vergleich der Betriebsarten/Betriebszustände "Aufpumpen" und "Dichtmittel fördern" in Diagrammen, wobei Pumpzeit, Volumenstrom und elektrischen Leistung des Kompressormotors jeweils in Relation zum Kompressordruck aufgetragen sind.

In der Betriebsart "Aufpumpen", d.h. in dem Betriebszustand, in dem der Reifen mit Luft befüllt wird (Fig. 2A) liegt der Druck im Kompressionsraum am Zylinderkopf unterhalb eines Drucks/Schaltdrucks P₀ von hier 250 kPa. Hier ist das variable Totluftvolumen 9 noch nicht aktiviert bzw. zugeschaltet und es existiert im oberen Totpunkt (OT) nur ein bauartbedingtes minimales Totluftvolumen 8 zwischen Kolben 2 und Zylinder 1. Durch eine periodische Kolbenbewegung wird nach dem bekannten Prinzip ein Luftstrom über das Auslassventil 7 durch den Luftauslass 3 befördert. In diesem Betriebszustand wird die Effizienz des Kompressors nicht beeinträchtigt.

Im Betriebszustand "Dichtmittel fördern" (Fig. 2B) ist durch die hohe Viskosität des zu fördernden Dichtmittels der Druck im Zylinderkopf gegenüber dem vorherigen Zustand deutlich erhöht. Der Druck im Luftauslass steigt also über den Schaltdruck P₀ an und öffnet den verschiebbar beweglich angeordneten Kolbenschieber 4 gegen einen entsprechend vorgewählten Federdruck der Feder 5. Durch die Bewegung des Kolbenschiebers 4 wird eine zusätzliche, mit dem Zylinder verbundene Kammer geöffnet und bereitgestellt, nämlich ein Druckraum 9, dessen Inhalt von dem durch die beiden Betriebsarten erzeugten jeweils unterschiedlichen Druck im Kompressionsraum veränderbar ist.

Hierbei ist der Kolbenschiebers 4 und/oder die Zuleitung zu dem Schieber so ausgelegt, dass Druckspitzen aus dem Zylinder abgedämpft werden und keine Öffnung des Schiebers hervorrufen. Weiterhin ist die Dämpfung des Kolbenschiebers 4 so gewählt, dass die maximale Bewegungsfrequenz des Schiebers deutlich unter der Hubfrequenz des Kolbens liegt. Diese Auslegung verhindert ein unkontrolliertes Aufschwingen des Systems.

Zwischen Innenwand des zweiten Zylinder 13 und Außenumfang des Kolbenschiebers 4 sind hier reibungsbehaftete Dichtringen 14 angeordnet.

Die nun zum Zylinder hin geöffnete Kammer, d.h. der Druckraum 9 dient als Totluftvolumen zur Volumenstrombegrenzung. Bei z. B. einem variablen Totluftvolumen von 10% des Kompressionsvolumens kann in dem vorliegenden Beispiel der Volumenstrom um bis zu 40% und die Lufttemperatur um bis zu 70% reduziert werden (Abbildung 2B). Auch nimmt die elektrische Leistungsaufnahme des Kompressors bei aktivierten Totluftvolumen um bis zu 30% ab.

Mit der Größe dieses Totluftvolumens 9 sowie dem Druck der Feder 5 auf den Kolbenschieber 4 kann die Reduktion des Volumenstroms und der Schaltdruck P₀ vorgewählt werden.

Sinkt der Druck im Luftauslass und damit im Kompressionsraum nach Fördern des Dichtmittels wieder unter den Schaltdruck P₀, so schließt der Kolbenschieber 4 und der Kompressor kehrt wieder in seinen normalen Betriebszustand zurück.

### Bezugszeichenliste

### (Teil der Beschreibung)

- 1: Zylinder/Kompressionszylinder
- 2: Kolben
- 3: Luftauslass
- 4: Kolbenschieber
- 5: Feder
- 6: Stelleinrichtung
- 7: Auslassventil
- 8: Minimales Totluftvolumen
- 9: Variables Totluftvolumen/Druckraum
- 10: Hubkolbenverdichter
- 11: Zylinderkopf
- 12: Manometer
- 13: Zweiter Zylinder
- 14: Reibungsbehaftete Dichtringe

## Patentansprüche

1. Vorrichtung zum Abdichten und Aufpumpen aufblasbarer Gegenstände, insbesondere zum Abdichten und Aufpumpen von Kraftfahrzeugreifen, wobei die Vorrichtung als Druckgasquelle eine Kompressoreinheit aufweist, welche als über ein Schubkurbelgetriebe angetriebener Hubkolbenverdichter (10) ausgebildet ist und einen in einem Zylinder (1) oszillierend bewegten Kolben (2) aufweist, wobei Kolben (2) und Zylinder (1) einen Kompressionsraum begrenzen und der Zylinder (1) ausgangsseitig durch einen Zylinderkopf (11) mit Auslassventil (7) verschlossen ist, wobei die Vorrichtung weiterhin ein Manometer (12) und einen Behälter für ein in den aufblasbaren Gegenstand einfüllbares selbsttätiges Dichtmittel und eine den Behälter und die Kompressoreinheit verbindende Ventil- und Verteilereinheit für Dichtmittel und Druckgas mit einer an den aufblasbaren Gegenstand anschließbaren Leitung aufweist, wobei die Ventil- und Verteilereinheit den Betrieb der Vorrichtung wahlweise in den beiden Betriebsarten "Aufpumpen" und "Dichtmittel fördern" erlaubt, **dadurch gekennzeichnet, dass** der Hubkolbenverdichter (10) mit einem variablen Totluftvolumen (9) versehen ist, dessen Inhalt abhängig von der jeweiligen Betriebsart veränderbar ist.

2. Vorrichtung nach Anspruch 1, bei der der Inhalt des Totluftvolumens abhängig von dem durch die beiden Betriebsarten erzeugten jeweils unterschiedlichen Druck im Kompressionsraum veränderbar ist.

3. Vorrichtung nach Anspruch 1 oder 2, bei der das Totluftvolumens durch einen mit dem Kompressionsraum verbundenen Druckraum (9) bereitgestellt wird, dessen Inhalt von dem durch die beiden Betriebsarten erzeugten jeweils unterschiedlichen Druck im Kompressionsraum veränderbar ist.

4. Vorrichtung nach Anspruch 3, bei der der Inhalt des weiteren Druckraums (9) gegen Federkraft veränderbar ist, wobei die Federkraft vorzugsweise einstellbar ist.

5. Vorrichtung nach Anspruch 3 oder 4, bei der der weitere Druckraum (9) in Form eines zweiten Zylinder (13) ausgebildet ist, in dem ein geführter verschiebbar beweglicher Kolbenschieber (4) angeordnet ist, der von einer Feder (5) beaufschlagt ist.

6. Vorrichtung nach einem der Ansprüche 1 bis 5, bei der der Inhalt des Totluftvolumens bzw. Druckraumes (9) auf mindestens 5 % des Kompressionsraums vergrößert werden kann.

7. Vorrichtung nach einem der Ansprüche 1 bis 6, bei der das Druckgas gedämpft vom Kompressionsraum in den Druckraum (9) strömt, insbesondere durch eine pneumatische Drossel strömt.

8. Vorrichtung nach Anspruch 7, bei der die Dämpfung dadurch erzeugt wird, dass der Kolbenschieber (4) im zweiten Zylinder (13) reibungsbehaftet verschoben wird, insbesondere dadurch, dass der Kolbenschieber (4) mit zwischen Innenwand des zweiten Zylinder (13) und Außenumfang des Kolbenschiebers (4) angeordneten Dichtringen (14) ausgebildet ist, die beim Verschieben eine Reibungsdämpfung erzeugen.

9. Vorrichtung nach Anspruch 7 oder 8, bei der die Dämpfung so erfolgt, dass die maximale Bewegungsfrequenz des Kolbenschiebers (4) unter der Hubfrequenz des Kolbens (2) liegt.

## Claims

1. Device for sealing and inflating inflatable objects, in particular for sealing and inflating motor vehicle tires, wherein the device has as a source of compressed gas a compressor unit, which is formed as a reciprocating piston compressor (10) driven by a slider crank mechanism and has a piston (2) moved in an oscillating manner in a cylinder (1), wherein the piston (2) and the cylinder (1) delimit a compression chamber and the cylinder (1) is closed on the output side by a cylinder head (11) with an outlet valve (7), wherein the device also has a pressure gage (12) and a reservoir for an automatic sealant that can be filled into the inflatable object and a valve-and-distributor unit for sealant and compressed gas, which connects the reservoir and the compressor unit and has a line that can be connected to the inflatable object, wherein the valve-and-distributor unit allows the device to be operated according to choice in the two operating modes "inflate" and "feed sealant", **characterized in that** the reciprocating piston compressor (10) is provided with a variable dead air volume (9), the content of which can be varied depending on the respective operating mode.

2. Device according to Claim 1, in which the content of the dead air volume can be varied depending on the different pressure that is respectively produced by the two operating modes in the compression chamber.

3. Device according to Claim 1 or 2, in which the dead air volume is provided by a pressure chamber (9) which is connected to the compression chamber and the content of which can be varied by the different pressure that is respectively produced by the two operating modes in the compression chamber.

4. Device according to Claim 3, in which the content of the further pressure chamber (9) can be varied against spring force, the spring force preferably being adjustable.

5. Device according to Claim 3 or 4, in which the further pressure chamber (9) takes the form of a second cylinder (13), arranged in which is a guided displaceably movable piston slide valve (4), which is acted upon by a spring (5).

6. Device according to one of Claims 1 to 5, in which the content of the dead air volume or pressure chamber (9) can be increased to at least 5% of the compression chamber.

7. Device according to one of Claims 1 to 6, in which the compressed gas flows from the compression chamber into the pressure chamber (9) in a damped manner, in particular flows through a pneumatic restrictor.

8. Device according to Claim 7, in which the damping is produced by the piston slide valve (4) being frictionally displaced in the second cylinder (13), in particular by the piston slide valve (4) being formed with sealing rings (14) that are arranged between the inner wall of the second cylinder (13) and the outer circumference of the piston slide valve (4) and produce a frictional damping during the displacement.

9. Device according to Claim 7 or 8, in which the damping is performed such that the maximum movement frequency of the piston slide valve (4) is below the stroke frequency of the piston (2).

## Revendications

1. Dispositif pour étanchéifier et gonfler des objets gonflables, en particulier pour étanchéifier et gonfler des pneus de véhicules automobiles, le dispositif présentant, en tant que source de gaz sous pression, une unité de compresseur qui est réalisée sous forme de compresseur à piston alternatif (10) entraîné par le biais d'un mécanisme bielle-manivelle et qui présente un piston (2) déplacé avec un mouvement d'oscillation dans un cylindre (1), le piston (2) et le cylindre (1) délimitant un espace de compression et le cylindre (1) étant fermé du côté de la sortie par une culasse (11) avec une soupape d'échappement (7), le dispositif présentant en outre un manomètre (12) et un récipient pour un milieu d'étanchéité à actionnement automatique pouvant être introduit dans l'objet gonflable et une unité de soupape et de distribution pour le milieu d'étanchéité et pour du gaz sous pression reliant le récipient et l'unité de compresseur, avec une conduite pouvant être raccordée à l'objet gonflable, l'unité de soupape et de distribution permettant le fonctionnement du dispositif de manière sélective dans les deux types de fonctionnement "gonflage" et "refoulement de milieu d'étanchéité", **caractérisé en ce que** le compresseur à piston alternatif (10) est pourvu d'un volume d'air mort variable (9) dont le contenu peut être modifié en fonction du type de fonctionnement respectif.

2. Dispositif selon la revendication 1, dans lequel le contenu du volume d'air mort peut être modifié en fonction de la pression différente produite à chaque fois par les deux types de fonctionnement dans l'espace de compression.

3. Dispositif selon la revendication 1 ou 2, dans lequel le volume d'air mort est fourni par un espace de pression (9) raccordé à l'espace de compression, dont le contenu peut être modifié par la pression à chaque fois différente produite dans l'espace de compression par les deux types de fonctionnement.

4. Dispositif selon la revendication 3, dans lequel le contenu de l'espace de pression supplémentaire (9) peut être varié à l'encontre d'une force de ressort, la force de ressort étant de préférence ajustable.

5. Dispositif selon la revendication 3 ou 4, dans lequel l'espace de pression supplémentaire (9) est réalisé sous la forme d'un deuxième cylindre (13) dans lequel est disposé un tiroir de piston (4) guidé mobile de manière coulissante, qui est sollicité par un ressort (5).

6. Dispositif selon l'une quelconque des revendications 1 à 5, dans lequel le contenu du volume d'air mort ou de l'espace de pression (9) peut être augmenté à au moins 5 % de l'espace de compression.

7. Dispositif selon l'une quelconque des revendications 1 à 6, dans lequel le gaz sous pression s'écoule sous forme amortie depuis l'espace de compression jusque dans l'espace de pression (9), en particulier à travers un étranglement pneumatique.

8. Dispositif selon la revendication 7, dans lequel l'amortissement est produit par le fait que le tiroir de piston (4) est déplacé sous l'effet de la friction dans le deuxième cylindre (13), en particulier par le fait que le tiroir de piston (4) est réalisé avec des bagues d'étanchéité (14) disposées entre la paroi interne du deuxième cylindre (13) et la périphérie extérieure du tiroir de piston (4), lesquelles génèrent un amortissement de friction lors du coulissement.

9. Dispositif selon la revendication 7 ou 8, dans lequel l'amortissement a lieu de telle sorte que la fréquence de déplacement maximale du tiroir de piston (4) soit en dessous de la fréquence de la course du piston (2).
